# EUROPEAN PATENT APPLICATION

(11) **EP 1 294 117 A1**
(43) Date of publication of application: **19.03.2003**
(21) Application number: 01307948.8
(22) Date of filing: 18.09.2001
(51) Int. Cl.: H04J 3/16, H04J 3/04

(54) **Field programmable gate array or application specific integrated circuit, and method of operation thereof**

(71) Applicant: LUCENT TECHNOLOGIES INC., Murray Hill, New Jersey 07974-0636 (US)
(72) Inventor: Farla, Rob, 2564 EV Den Haag (NL); Lahpor, GertJan, 1216 ST Hilversum (NL)
(74) Representative: Sarup, David Alexander

(57) **Abstract**

A field programmable gate array (FPGA) or application specific integrated circuit (ASIC) for use in SDH/SONET networks includes built-in means to select (12,14) for evaluation and/or modification a byte within a frame, and built-in means to count (16) the bytes processed within a frame to identify the selected byte.

## Description

### Technical Field

The present invention relates to a field programmable gate array (FPGA) or application specific integrated circuit (ASIC) for use in SDH/SONET networks. The present invention also relates to a method of operation thereof.

### Background of the Invention

SDH(Synchronous Digital Heirarchy)/SONET (Synchronous Optical NETwork) transmission equipment is used to transport streams of data. Transport is segmented into frames, which are time segments of transmission, lasting typically 125 microseconds. The equipment inserts header data (SOH: Section OverHead) and payload information in each frame. The payload information contains data from the stream that is transported, payload data from successive frames makes up a continuous stream. By definition, the header data is data that is generated per frame. The header contains information like synchronization data, which is used to locate the start of a frame, error detection data for the frame, to provide communication channels between equipment for transport of e.g. management and protection coordination information a frame source ID, national bytes etc.

In laboratory environments it is often hard to verify/debug SDH/SONET specific Field Programmable Gate Array (FPGA) or Application Specific Integrated Circuit (ASIC) designs. This problem arises from the fact that it is often not clear whether an erroneous behaviour is caused by the design itself, or the system in which it is tested namely the optical fibres interconnecting the FGPA's/ASIC's. Known SDH/SONET generator/monitoring equipment can be used but the only way into the FGPA or ASIC, which is via a processor interface, often does not enable the erroneous behaviour to be sufficiently investigated. Due to today's technology being so small it is very difficult to get access to signals which you want to monitor with test equipment, such as an oscilloscope or logic analyzer, inside the system.

### Summary of the Invention

The present invention provides a field programmable gate array (FPGA) or application specific integrated circuit (ASIC) for use in SDH/SONET networks, comprising built-in means to select for evaluation and/or modification a byte within a frame, and built-in means to count the bytes being processed within a frame to identify the selected byte.

Preferably the FPGA or ASIC comprises an offset register (14) operative to store a timing offset from the start of a frame (A1/A2) representative of the selected byte, and a comparator (16) operative to identify at which byte the timing offset is reached.

Preferably the means to select (12,14) is operative to select the byte for evaluation, the FPGA or ASIC further comprising means to capture (18) the value of the predetermined byte once identified.

Alternatively preferably the means to select (12,14) is operative to select the byte for modification, the FPGA or ASIC further comprising modification means (20,22) operative to adjust the value of the selected byte once identified byte to a predetermined value.

The present invention in its preferred embodiments advantageously provides a small add-on which increases the testability of SDH/SONET specific FPGA/ASIC designs. In the preferred embodiments, by specifying an offset value with respect to the start of a SDH/SONET frame, any byte within a frame can be monitored and/or modified.

The benefits of having the preferred debugger/monitor incorporated within a FPGA or ASIC design are numerous. This monitoring functionality is then available which creates the opportunity to debug a FPGA or ASIC design without having to modify the design first. The built-in functionality enables debugging of all SDH/SONET-related overhead bytes. It also enables payload-data to be debugged. Both monitoring and error-insertions are possible with the preferred monitor debugger.

The preferred monitor/debugger itself is very small and does not require any extra external connections (pins). In this way the preferred monitor/debugger fits within ASIC/FPGA targets for size and number of connection pins without severe cost penalties.

The present invention also provides a method of, in a FPGA or ASIC for use in SDH/SONET networks, selecting for evaluation and/or modification a byte within a frame and counting the bytes processed within a frame to identify the selected byte.

### Brief Description of the Drawings

Figure 1 is a diagram of an example FGPA including a monitor/debugger,
Figure 2 is a diagram showing the functionality of the monitor/debugger shown in Figure 1, and
Figure 3 is a diagram of an SDH/SONET frame showing how a byte to be monitored is selected.

### Detailed Description

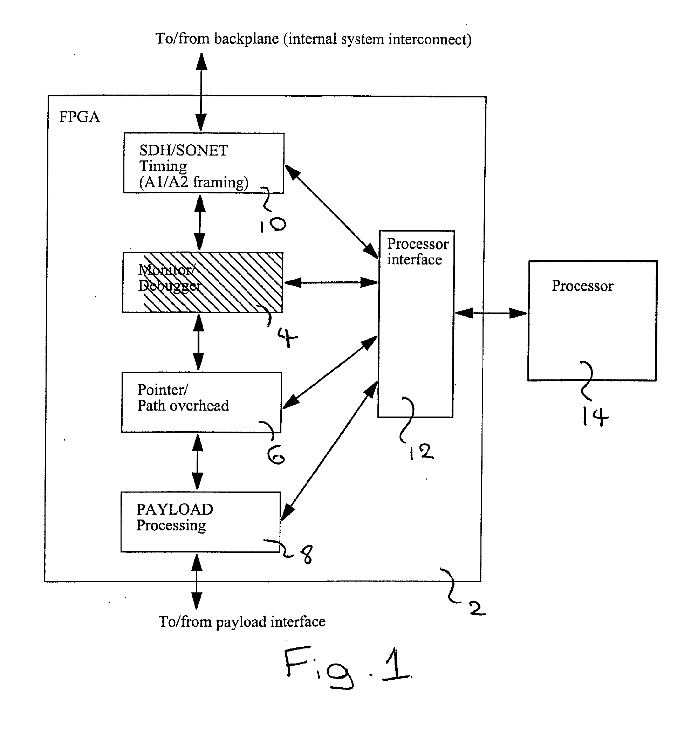

As shown in Figure 1, the SDH/SONET monitor/debugger 4 is a small add-on to the original FPGA 2 design. The FPGA 2 includes a header processing stage 6, a payload data processing stage 8, a timing stage 10 and the SDH/SONET monitor/debugger 4.. The stages 6,8,10 and the monitor/debugger 4 communicate either directly or via the processor interface 12. The processor interface 12 is connected to a processor (CPU)14.

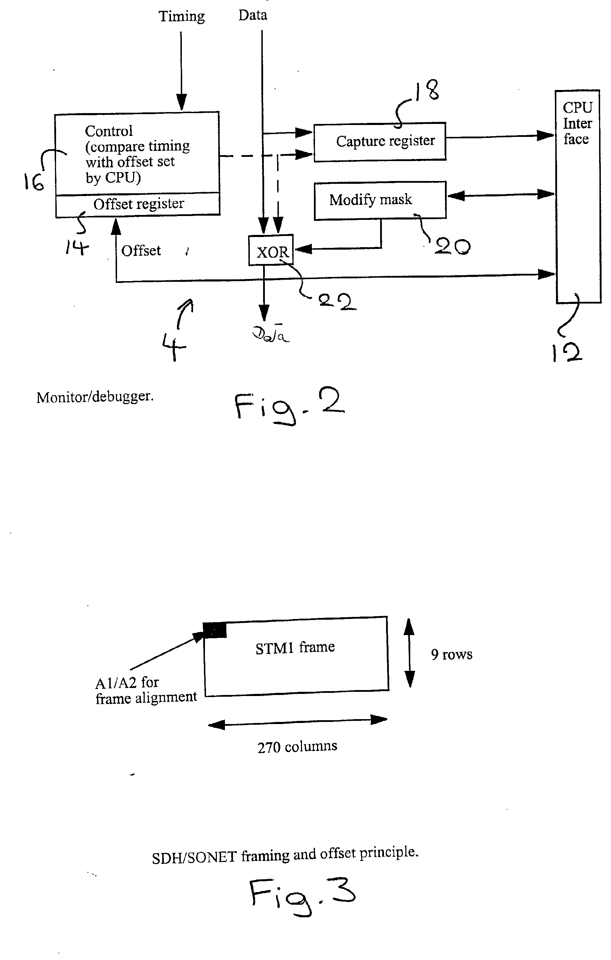

The SDH/SONET monitor/debugger 4 synchronizes to the start of an SDH/SONET frame. As shown in Figure 2, which byte inside the SDH/SONET frame (offset from start of frame) is to be monitored is selected via the processor interface 12, the offset being stored in an offset register 14. The monitor/debugger 4 also includes a byte counter (not shown) which counts the bytes within a SDH/SONET frame. The monitor/debugger 4 also includes a comparator (denoted Control 16) which compares this byte count with the offset stored in the offset register 14 specified by the processor interface. When a control signal is sent from the comparator 16 that the timing offset has been reached , i.e. the predetermined byte is now being processed, a register (Capture register 18) captures and holds the byte contents for sending on to the processor interface 12. The contents of the byte capture register 18 are thus fed to processor interface 12. In this way, any byte within a SDH/SONET frame which is received by the FPGA is monitored and checked for its contents without the need to connect any external measurement equipment.

As shown in Figure 3, any byte in the frame is specified by its row and column offset with respect to A1/A2 where A1/A2 are the first six bytes of the frame, a frame having 270 columns and 9 rows of bytes.

The same can be done for the bytes sent by the FPGA into an SDH/SONET frame for transmission.

By providing a modification mask 20 the byte being received or sent can be changed, i.e a deliberate error can be inserted in the byte being specified for test purposes. The modification mask 20 is provided through the processor interface 12 and is exclusively ored (XOR) 22 with the byte being received or sent when the control signal that the selected byte is there is sent from the comparator 16.

In SDH/SONET systems some applications use multiframes where one multiframe is built up of 4 or 16 SDH/SONET frames (so-called STM4 and STM16 frames respectively). An offset in terms of rows and columns is then used together with a parameter the value of which indicates to which specific frame within a multi-frame the offset applies. Combining the offset and parameter allows bytes anywhere within multiframes to be monitored and/or modified. For specifying the offset, parameter and the modification mask value, and reading the monitored byte, the processor interface is used.

In preferred embodiments, the monitor/debugger is used in particular to verify GEOS FPGA designs, used in various SONET/SDH transport products offering Gigabit Data (Ethernet) interfaces over SONET/SDH using virtual concatenation and LCAS. GEOS stands for Gigabit Ethernet Over SONET/SDH: its basic function being to map Gigabit ethernet frames into SONET/SDH frames and vice versa. This is controlled by software via a MPC860 processor interface. LCAS stands for Link Capacity Adjustment Scheme, which is a standard allowing adjustment of bandwidth.

In other embodiments, this add-on design can also be used for verifying any other SDH/SONET design with or without virtual concatenation and/or LCAS.

## Claims

1. A field programmable gate array (FPGA) or application specific integrated circuit (ASIC) for use in SDH/SONET networks, comprising
built-in means to select (12,14) for evaluation and/or modification a byte within a frame, and
built-in means to count (16) the bytes processed within a frame to identify the selected byte.

2. A FPGA or ASIC according to claim 1 comprising an offset register (14) operative to store a timing offset from the start of a frame (A1/A2) representative of the selected byte, and a comparator (16) operative to identify at which byte the timing offset is reached.

3. An FPGA or ASIC according to claim 1 or claim 2, in which the means to select (12,14) is operative to select the byte for evaluation, the FPGA or ASIC further comprising means to capture (18) the value of the selected byte once identified.

4. An FPGA or ASIC according to claim 3, further comprising means to send (12) the value of the byte for subsequent processing.

5. A FPGA or ASIC according to claim 1 or claim 2, in which the means to select (12,14) is operative to select the byte for modification, the FPGA or ASIC further comprising modification means (20,22) operative to adjust the value of the selected byte once identified to a predetermined value.

6. A FPGA or ASIC according to any preceding claim, in which the frame is an SDH/SONET frame.

7. A FPGA or ASIC according to any preceding claim, in which the frame is an SDH/SONET multiframe.

8. A FPGA or ASIC according to claim 7, in which the frame is a multiframe comprising four or sixteen SDH/SONET frames.

9. An FPGA or ASIC according to any preceding claim in which the selected byte is SDH/SONET overhead data.

10. An FPGA or ASIC according to any of claims 1 to 8 in which the selected byte is SDH/SONET payload data.

11. A method of, in a FPGA or ASIC for use in SDH/SONET networks, selecting for evaluation and/or modification a byte within a frame and counting the bytes processed within a frame to identify the selected byte.
